(19) Europäisches Patentamt
European Patent Office
Office européen des brevets

(11) **EP 3 061 661 B1**

(12) **EUROPEAN PATENT SPECIFICATION**

(45) Date of publication and mention
of the grant of the patent:
**25.09.2019 Bulletin 2019/39**

(51) Int Cl.:
***B60W 30/18*** *(2012.01)*      ***B60W 50/10*** *(2012.01)*
***B60W 10/06*** *(2006.01)*

(21) Application number: **16155722.8**

(22) Date of filing: **15.02.2016**

(54) **CONTROL APPARATUS FOR A VEHICLE**

STEUERUNGSVORRICHTUNG FÜR EIN FAHRZEUG

APPAREIL DE COMMANDE POUR VEHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2015 JP 2015039321**

(43) Date of publication of application:
**31.08.2016 Bulletin 2016/35**

(73) Proprietor: **Toyota Jidosha Kabushiki Kaisha
Toyota-shi, Aichi 471-8571 (JP)**

(72) Inventors:
• **SATO, Hiroki
Aichi 471-8571 (JP)**
• **MATSUBARA, Wataru
Aichi 471-8571 (JP)**
• **MIYAMOTO, Yuki
Aichi 471-8571 (JP)**

(74) Representative: **J A Kemp
14 South Square
Gray's Inn
London WC1R 5JJ (GB)**

(56) References cited:
**WO-A2-2009/024305      DE-A1- 10 161 900
DE-A1- 19 845 167**

**Description**

FIELD OF THE INVENTION

The present invention relates to a control apparatus for a vehicle, which is configured to limit an increase of an engine torque in a non-driven state of the vehicle upon an increase of an operation amount of a vehicle accelerating member such as an accelerator pedal.

BACKGROUND OF THE INVENTION

WO 2009/024305 A describes a system and a method for handling tolerances in a vehicle drivetrain including detecting a request for a change in direction of the output torque of the drivetrain. A profile is determined to bridge over tolerances in the drivetrain within a predetermined time by controlling the output rotational speed of the transmission.

There is well known a control apparatus for a vehicle provided with an engine and an automatic transmission to transmit a drive force of the engine to drive wheels, which control apparatus is configured to limit an increase of the engine torque in a non-driven state of the vehicle upon an increase of an operation amount of an accelerator pedal. JP-2000-229526A discloses an example of such a vehicle control apparatus. This document discloses an engine torque control in which a backlash reducing torque of the engine generated to reduce a drive line backlash of the vehicle upon an operation of the accelerator pedal is reduced with an increase of a speed ratio of a continuously variable transmission and a decrease of a running speed of the vehicle, and a length of time of control of the backlash reducing torque is elongated with the increase of the speed ratio of the continuously variable transmission. According to the control technique disclosed in the above-identified document, the engine torque is limited on the basis of the speed ratio of the continuously variable transmission and the vehicle speed when the accelerator pedal is operated.

By the way, according to the technique disclosed in the above-identified document, a transition from the non-driven state of the vehicle to a driven state of the vehicle is detected when an idling switch that is turned on when the accelerator pedal is released is turned off, and the engine torque limiting control is implemented when the transition from the non-driven state to the driven state of the vehicle is detected. Therefore, the torque limiting control cannot be implemented when the accelerator pedal is operated in the non-driven state of the vehicle with the idling switch being placed in the off state (for instance, while the vehicle is decelerated with a relatively high running resistance of the vehicle in a slightly operated state of the accelerator pedal). Accordingly, it is not possible to restrict or prevent vibrations of the vehicle (hereinafter referred to also as "tip-in shock") due to reduction of the backlash in a power transmitting system. Further, it is not possible to adequately implement the torque limiting control depending upon whether the vehicle is in a state requiring a control to restrict or prevent the tip-in shock or not, and is therefore impossible to ensure not only restriction or prevention of the tip-in shock but also a high degree of drivability of the vehicle.

SUMMARY OF THE INVENTION

The present invention was made in view of the background art described above. It is therefore an object of the present invention to provide a control apparatus for a vehicle, which permits not only the restriction or prevention of the tip-in shock but also the high degree of drivability of the vehicle, when the operation amount of the vehicle accelerating member is increased.

The object indicated above is achieved according to the principle of the present invention, which provides a control apparatus as defined in appended claim 1.

The control apparatus according to the present invention described above is configured to make the determination as to whether the vehicle is placed in the non-driven state, by using the threshold value of the torque of the engine which is set such that the threshold value increases with the increase of the vehicle running speed of the vehicle and/or the increase of the speed ratio of the automatic transmission, since it is necessary to increase the torque of the engine with the increase of the vehicle running speed so as to follow an increase of a vehicle running resistance (road-running load of the vehicle), and/or since the torque of the engine increases with the increase of the speed ratio of the automatic transmission (to shift down the automatic transmission toward the lowest gear position), and the shock to be generated due to elimination of the backlash in the power transmitting system increases with the increase of the operation amount of the vehicle accelerating member. Accordingly, the determination that the vehicle is placed in the non-driven state is more likely to be made when the vehicle running speed is relatively high and/or when the speed ratio of the automatic transmission is relatively high, making it possible to implement the engine torque limiting control so as to limit an increase of the engine torque in response to the increase of the operation amount of the vehicle accelerating member, for thereby restricting or preventing the tip-in shock, in the state of the vehicle in which the tip-in shock is likely to be generated. Further, the present embodiment is configured to set the non-driven-state determining threshold value used for the determination as to whether the vehicle is placed in the non-driven state or not, such that the threshold value decreases with a decrease of the vehicle running speed and/or a decrease of the speed ratio of the automatic transmission (to shift up the automatic transmission toward the highest gear position). Accordingly, the determination that the vehicle is placed in the non-driven state is unlikely to be made when the vehicle running speed is relatively low or when the speed ratio is relatively low, whereby the engine torque limiting control to restrict or prevent the increase of the operation amount of the vehicle accelerating member is unlikely to be implemented in the state of the vehicle in which the tip-in shock is unlikely to be generated, so that the acceleration response of the vehicle is improved. Thus, the present control apparatus permits not only the restriction or prevention of the tip-in shock but also a high degree of acceleration response of the vehicle, when the operation amount of the vehicle accelerating member is increased.

In one preferred form of the present invention, the control apparatus further includes a sensor for detecting an operation amount of an accelerator pedal, as the operation amount of the vehicle accelerating member.

In a further preferred form of the invention, the threshold setting portion is configured to set the threshold value of the torque of the engine such that the threshold value increases with both of the increase of the running speed of the vehicle and the increase of the speed ratio of the automatic transmission.

In another preferred form of the invention, the threshold setting portion is configured to set the threshold value of the torque of the engine such that the threshold value increases with the increase of the running speed of the vehicle.

In still another preferred form of the invention, the threshold setting portion is configured to set the threshold value of the torque of the engine such that the threshold value increases with the increase of the speed ratio of the automatic transmission.

BRIEF DESCRIPTION OF THE DRAWINGS

Fig. 1 is a schematic view showing an arrangement of a vehicle to be controlled by a control apparatus according to the present invention, and major control portions of the control device configured to perform various control functions to control the vehicle;

Fig. 2 is a view showing an example of a predetermined drive force map;

Fig. 3 is a view showing an example of a predetermined engine torque map;

Fig. 4 is a view showing an example of a predetermined transmission shifting map;

Fig. 5 is a view showing an example of a predetermined threshold value map for determining a non-driven state of the vehicle according to one embodiment of this invention;

Fig. 6 is a flow chart illustrating an essential part of a control operation of an electronic control device according to the embodiment of Fig. 5, namely, a control operation permitting not only reduction of a tip-in shock but also a high degree of drivability of the vehicle upon an increase of an operation amount of an accelerator pedal;

Fig. 7 is a time chart indicating an example of the control operation of the flow chart of Fig. 6 performed when the accelerator pedal is operated in a state of the vehicle in which the tip-in shock is comparatively unlikely to be generated;

Fig. 8 is a time chart indicating an example of the control operation of the flow chart of Fig. 6 performed when the accelerator pedal is operated in a state of the vehicle in which the tip-in shock is comparatively likely to be generated;

Fig. 9 is a view corresponding to that of Fig. 5, showing a predetermined threshold value map for determining the non-driven state of the vehicle according to another embodiment of this invention; and

Fig. 10 is a view corresponding to that of Fig. 5, showing a predetermined threshold value map for determining the non-driven state of the vehicle according to a further embodiment of this invention.

DETAILED DESCRIPTION OF PREFERRED EMBODIMENT

Referring to the drawings, preferred embodiments of the present invention will be described in detail.

FIRST EMBODIMENT

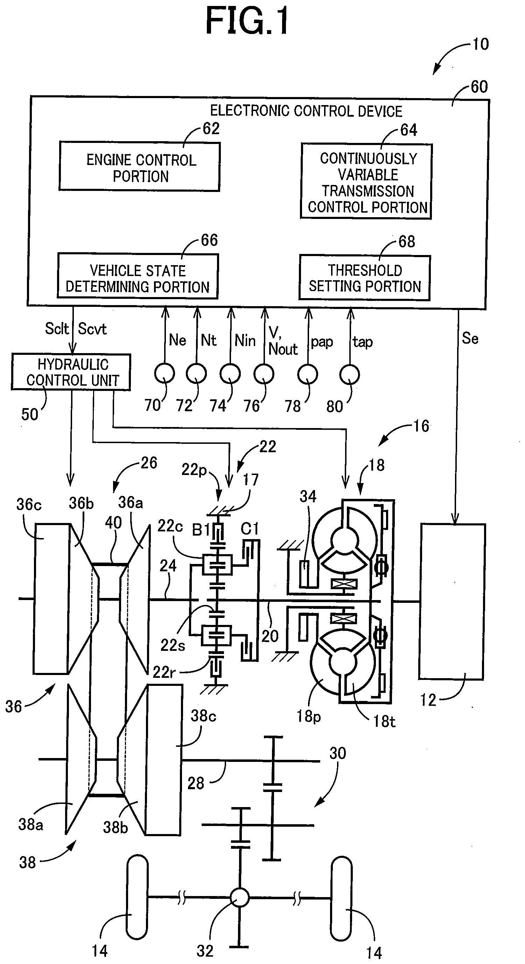

Referring first to the schematic view of Fig. 1, there is shown an arrangement of a vehicle 10 to be controlled by a control apparatus in the form of an electronic control device 60 constructed according to one embodiment of the present invention. The schematic view shows major control portions of the electronic control device 60 configured to perform various control functions to control the vehicle 10. As shown in Fig. 1, the vehicle 10 is provided with a vehicle drive power source in the form of an engine 12, drive wheels 14, and a power transmitting system 16 disposed between the engine 12 and the drive wheels 14. The power transmitting system 16 is provided with various devices disposed in a stationary member in the form of a housing 17. These devices include: a fluid-operated power transmitting device, connected to the engine 12, in the form of a torque converter 18 having a known arrangement; a turbine shaft 20 connected to the torque converter 18; a forward/reverse switching device 22 connected to the turbine shaft 20; an input shaft 24 connected to the forward/reverse switching device 22; an automatic transmission in the form of a continuously variable transmission 26 connected to the input shaft 24; an output shaft 28 connected to the continuously variable transmission 26; a speed reducing gear device 30; and a differential gear device 32. In the thus constructed power transmitting system 16, a drive force or torque generated by the engine 12 is transmitted to the right and left drive wheels 14 through the torque converter 18, forward/reverse switching device 22, continuously variable transmission 26, speed reducing gear device 30, and differential gear device 32, in this order of description.

The torque converter 18 includes a pump impeller 18p connected to the engine 12, and a turbine impeller 18t connected to the turbine shaft 20. To the pump impeller 18p, there is connected a mechanical oil pump 34 operated by the engine 12 to deliver a pressurized working fluid used to shift the continuously variable transmission 26, to apply a tension to a transmission belt 40 of the continuously variable transmission 26, to switch a forward drive clutch C1 and a reverse drive brake B1 (described below) between their engaged and released states, and to lubricate various portions of the power transmitting system 16.

The forward/reverse switching device 22 includes a planetary gear set 22p of a double-pinion type, and the above-indicated forward drive clutch C1 and reverse drive brake B1. The planetary gear set 22p includes a sun gear 22s connected to the turbine shaft 20, a carrier 22c connected to the input shaft 24, and a ring gear 22r to be selectively fixed to the housing 17 through the reverse drive brake B1. The carrier 22c and the sun gear 22s are selectively connectable to each other through the forward drive clutch C1. The forward drive clutch C1 and reverse drive brake B1 are known hydraulically operated frictional coupling devices. The thus constructed forward/reverse switching device 22 is placed in a forward drive state for driving the vehicle 10 in the forward direction when the forward drive clutch C1 is placed in the engaged state while the reverse drive brake B1 is placed in the released state, in a reverse drive state for driving the vehicle 10 in the reverse direction when the reverse drive brake B1 is placed in the engaged state while the forward drive clutch C1 is placed in the released state, and in a neutral or power-cutoff state (in which power is not transmitted through the forward/reverse switching device 22) when the forward drive clutch C1 and the reverse drive brake B1 are both placed in the released states.

The continuously variable transmission 26 includes a primary pulley 36 mounted on the input shaft 24, a secondary pulley 38 mounted on the output shaft 28, and a power transmitting element in the form of the above-indicated transmission belt 40 connecting the primary and secondary pulleys 36 and 38. These primary and secondary pulleys 36 and 38 have effective diameters that are variable. The continuously variable transmission 26 are configured to transmit the drive force of the engine 12 to the drive wheels 14 through a friction force (belt tensioning force) between the pulleys 36, 38 and the transmission belt 40.

The primary pulley 36 includes: a stationary sheave 36a fixed to the input shaft 24; a movable sheave 36b disposed on the input shaft 24 such that the movable sheave 36b is rotated with the input shaft 24 and is axially movable relative to the input shaft 24; and a hydraulic actuator in the form of a hydraulic cylinder 36c configured to generate a primary thrust force Win (primary pressure Pin * pressure receiving surface area Ain) for changing an effective width of a V-groove of the primary pulley 36, which is defined by and between the stationary and movable sheaves 36a and 36b. The secondary pulley 38 includes: a stationary sheave 38a fixed to the output shaft 28; a movable sheave 38b disposed on the output shaft 28 such that the movable sheave 38b is rotated with the output shaft 28 and is axially movable relative to the output shaft 28; and a hydraulic actuator in the form of a hydraulic cylinder 38c configured to generate a secondary thrust force Wout (secondary pressure Pout * pressure receiving surface area Aout) for changing an effective width of a V-groove of the secondary pulley 38, which is defined by and between the stationary and movable sheaves 38a and 38b. The primary pressure Pin is applied to the hydraulic cylinder 36c while the secondary pressure Pout is applied to the hydraulic cylinder 38c. These hydraulic pressures Pin and Pout are pulley pressures for generating the respective thrust forces Win and Wout which act on the respective movable sheaves 36b and 38b so as to axially move these movable sheaves 36b, 38b toward the respective stationary sheaves 36a and 38a.

The vehicle 10 is further provided with a hydraulic control unit 50 which is configured to regulate the primary pressure Pin and the secondary pressure Pout for controlling the primary thrust force Win and the secondary thrust force Wout in the continuously variable transmission 26, so that the effective widths of the V-grooves of the pulleys 36 and 38 are changed to change the effective diameters of the pulleys 36, 38 connected to each other by the transmission belt 40, whereby a speed ratio $\gamma$ of the continuously variable transmission 26 (= input shaft speed Nin/output shaft speed Nout) is varied while at the same time the belt tensioning pressure is controlled so as to prevent a slipping action of the transmission belt 40 relative to the pulleys 36 and 38. Namely, the primary pressure Pin (primary thrust force Win) and the secondary pressure Pout (secondary thrust force Wout) are regulated for controlling the actual speed ratio $\gamma$ so as to coincide with a target value ytgt, while preventing the slipping action of the transmission belt 40.

The above-indicated electronic control device 60 provided as the control apparatus for controlling the vehicle 10 includes a so-called "microcomputer" incorporating a CPU, a RAM, a ROM and an input/output interface. The CPU is configured to perform signal processing operations for various controls of the vehicle 10, according to control programs stored in the ROM while utilizing a temporary data storage function of the RAM. For instance, the electronic control device 60 is configured to implement output controls of the engine 12, and a belt tensioning force control of the continuously variable transmission 26. The electronic control device 60 may include mutually independent control units for respective control functions such as an engine control function and a hydraulic pressure control function, according to respective control requirements.

The electronic control device 60 is configured to receive output signals of various sensors provided on the vehicle 10, such as: an output signal of an engine speed sensor 70 indicative of an operating speed Ne of the engine 12; an output signal of a turbine shaft speed sensor 72 indicative of a rotating speed Nt of the turbine shaft 20; an output signal of an input shaft speed sensor 74 indicative of a rotating speed Nin of the input shaft 24; an output signal of an output shaft speed sensor 76 indicative of a rotating speed Nout of the output shaft 28 corresponding to a running speed V of the vehicle 10; an output signal of an accelerator pedal operation amount sensor 78 indicative of an operation amount pap of a vehicle accelerating member (in the form of a known accelerator pedal); and an output signal of a throttle valve opening angle sensor 80 indicative of an opening angle tap of an electronic throttle valve disposed in an intake pipe of the engine 12. The electronic control device 60 is further configured to generate various signals to be applied to various devices of the vehicle 10, such as: an engine output control command signal Se for controlling the output of the engine 12; hydraulic control command signals Scvt for controlling hydraulic pressures to shift the continuously variable transmission 26; and a hydraulic control command signal Sclt for controlling the hydraulic pressures to bring the forward drive clutch C1 and the reverse drive brake B1 into the engaged states. It is noted that the operation amount pap of the accelerator pedal represents an output of the vehicle 10 (a drive force of the engine 12) required by the vehicle operator. That is, the operation amount pap is a required output of the vehicle 10 or a required output of the engine 12, which is represented by a manual operation by the vehicle operator.

The electronic control device 60 includes engine control means in the form of an engine control portion 62, and continuously variable transmission control means in the form of a continuously variable transmission control portion 64.

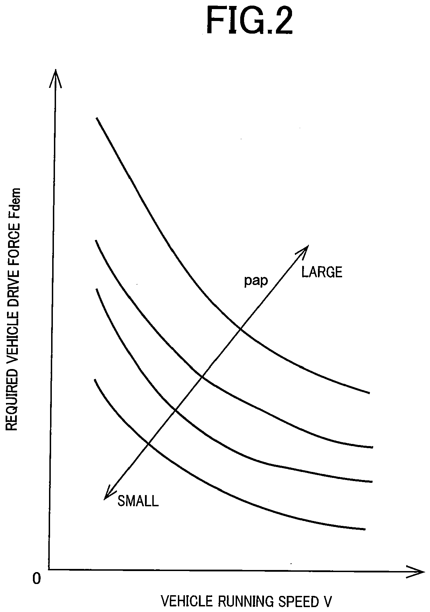

The engine control portion 62 is configured to calculate a required vehicle drive force Fdem on the basis of the accelerator pedal operation amount pap. For example, the engine control portion 62 calculates the required vehicle drive force Fdem on the basis of the accelerator pedal operation amount pap and the vehicle running speed V and according to a predetermined drive force map as shown in Fig. 2, which is obtained by experimentation or theoretically determined and stored in the electronic control device 60. The drive force map of Fig. 2 represents a relationship set in advance between the vehicle running speed V and the required vehicle drive force Fdem, with the accelerator pedal operation amount pap used as a control parameter. The engine control portion 62 calculates a target engine torque Tetgt for establishing the thus calculated required vehicle drive force Fdem, according to the following equation (1), for example. In the equation (1), "rw" represents an effective radius of tires of the drive wheels 14, "ytgt" represents the target value of the speed ratio of the continuously variable transmission 26, "i" represents a speed reduction ratio of the speed reducing gear device 30 and the differential gear device 32, and "t" represents a torque ratio of the torque converter 18 (= turbine torque Tt/pump torque Tp). The torque ratio t is a function of a speed ratio e of the torque converter 18 (= turbine speed Nt/pump speed Np (i.e., engine speed Ne)). The engine control portion 62 calculates the torque ratio t on the basis of the actual speed ratio e and according to a predetermined map representative of a relationship between the speed ratio e and the torque ratio t.

$$\text{Tetgt} = (\text{Fdem} * \text{rw})/(\gamma\text{tgt} * \text{i} * \text{t}) \ldots\ldots\ldots\ldots\ldots (1)$$

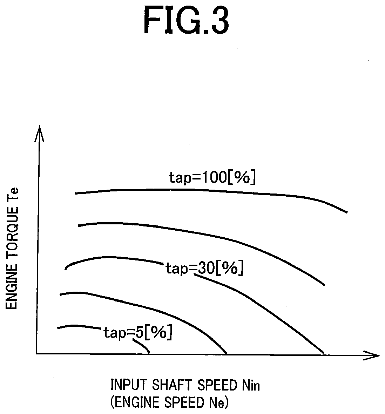

The engine control portion 62 calculates a target value taptgt of the opening angle tap of the throttle valve for establishing the target engine torque Tetgt. For example, the engine control portion 62 calculates the target opening angle taptgt of the throttle valve on the basis of the target engine torque Tetgt and a target value Nintgt of the input shaft speed Nin of the continuously variable transmission 26 (or the engine speed Ne calculated on the basis of the target input shaft speed Nintgt) with a predetermined engine torque map as shown in Fig. 3. The engine control portion 62 applies the engine output control command signal Se to a throttle actuator, to control the actual opening angle tap of the throttle valve to the calculated target value taptgt, so as to establish the target engine torque Tetgt. In addition, the engine control portion 62 applies the engine output control command signal Se to a fuel injecting device and an igniting device, so as to establish the target engine torque Tetgt. The engine torque map shown in Fig. 3 represents a predetermined relationship among the engine torque Te, the input shaft speed Nin (engine speed Ne) and the throttle valve opening angle tap. It is noted that the turbine speed Nt and the input shaft speed Nin are equal to each other in the engaged state of the forward drive clutch C1 during forward running of the vehicle 10, the relationship between the engine speed Ne and the input shaft speed Nin is represented by an equation Ne = Nin/e, where "e" represents the speed ratio of the torque converter 18. Accordingly, the engine speed Ne and the input shaft speed Nin are convertible with each other. It is also noted that in an engaged state of a lock-up clutch incorporated in the torque converter 18, the turbine speed Nt (input shaft speed Nin) and the engine speed Ne are equal to each other.

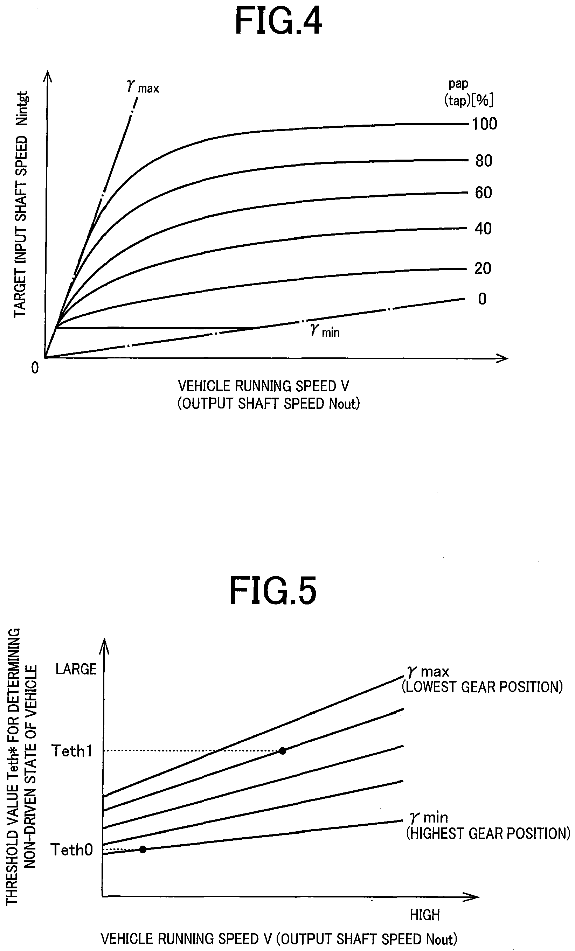

The continuously variable transmission control portion 64 is configured to calculate the target speed ratio ytgt of the continuously variable transmission 26 on the basis of the accelerator pedal operation amount pap. For example, the continuously variable transmission control portion 64 calculates the target input shaft speed Nintgt on the basis of the vehicle running speed V (or the output shaft speed Nout), and an operator-required value tapd of the throttle valve opening angle tap obtained from the accelerator pedal operation amount pap (or according to a predetermined relationship or map), and according to a predetermined transmission shifting map as shown in Fig. 4. The continuously variable transmission control portion 64 calculates the target speed ratio ytgt (= Nintgt/Nout) on the basis of the thus calculated target input shaft speed Nintgt. The transmission shifting map of Fig. 4 represents a relationship set in advance between the vehicle running speed V (or the output shaft speed Nout) and the target input shaft speed Nintgt, with the accelerator pedal operation amount pap (or the throttle valve opening angle tap) used as a control parameter. This transmission shifting map corresponds to a condition of shifting of the continuously variable transmission 26 to permit a compromise between the drivability of the vehicle 10 and the fuel economy of the engine 12. For instance, the transmission shifting map is formulated to establish the target input shaft speed Nintgt such that an operating point PE of the engine 12 moves on a highest fuel economy line Lfe. The above-indicated engine operating point PE is defined by the operating speed Ne and torque Te of the engine 12. The above-indicated highest fuel economy line Lfe represents a predetermined relationship (fuel economy map not shown) known in the art, between the target input shaft speed Nintgt (or the engine speed Ne) and the engine torque Te which are taken along respective two axes of a two-dimensional coordinate system. This relationship permits the compromise between the vehicle drivability and the engine fuel economy.

The continuously variable transmission control portion 64 determines a target value of the primary pressure Pin (namely, a target primary pressure Pintgt) and a target value of the secondary pressure Pout (namely, a target secondary pressure Pouttgt), so as to establish the target speed ratio ytgt of the continuously variable transmission 26 while preventing a slipping action of the transmission belt 40, and applies, to the hydraulic control unit 50, the hydraulic control command signals Scvt corresponding to the respective target primary and secondary pressures Pintgt and Pouttgt.

When the vehicle 10 is switched from a non-driven state to a driven state, a direction of elimination of a backlash in the drive line of the power transmitting system 16 (a backlash existing in gear trains and spline-coupling portions in the drive line) is reversed, giving rise to a risk of generation of vibrations ("tip-in shock") of the vehicle 10. In the non-driven state of the vehicle 10, a non-vehicle-driving torque transmitted from the drive wheels 14 to the engine 12 is larger than the engine torque Te generated to drive the vehicle 10. In the driven state of the vehicle 10, on the other hand, the engine torque Te is larger than the non-vehicle-driving torque transmitted from the drive wheels 14 to the engine 12. When the engine torque Te is increased in response to an operation of the accelerator pedal from the non-operated state or an increase of the operation amount pap of the accelerator pedal in the non-driven state of the vehicle 10, the vehicle 10 is switched from the non-driven state to the driven state. To reduce the tip-in shock due to elimination of the backlash due to this switching or transition of the running state of the vehicle 10, the engine control portion 62 implements an engine torque limiting control (engine torque smoothing control) to limit the engine torque Te in response to an increase of the accelerator pedal operation amount pap, when a vehicle state determining portion 66 (described below) determines that the vehicle 10 is in the driven state. For example, the engine control portion 62 implements the engine torque limiting control in which the target throttle valve opening angle taptgt is gradually or slowly increased at a predetermined relatively low rate, from the value taptgt corresponding to the target engine torque Tetgt before the increase of the accelerator pedal operation amount pap, to the value taptgt corresponding to the target engine torque Tetgt after the increase of the accelerator pedal operation amount pap. At this time, the engine control portion 62 may implement the engine torque limiting control by limiting an amount of injection of a fuel into the engine 12 or retarding a timing of ignition of the engine 12, in addition to or instead of limiting an increase of the throttle valve opening angle tap.

The electronic control device 60 further includes vehicle state determining means in the form of the above-indicated vehicle state determining portion 66, and threshold setting means in the form of a threshold setting portion 68. The vehicle state determining portion 66 is configured to determine whether the vehicle 10 is placed in the non-driven state or not, upon an increase of the accelerator pedal operation amount pap, depending upon whether the engine torque Te is smaller than a predetermined threshold value Teth*. The threshold setting portion 68 is configured to set the predetermined threshold value Teth*. Described more specifically, it is more desirable to ensure a high degree of acceleration response of the vehicle than to restrict or prevent the tip-in shock, when the accelerator pedal is operated while its operation amount pap is relatively large. Accordingly, the vehicle state determining portion 66 makes the determination as to whether the vehicle 10 is placed in the non-driven state or not, only when the accelerator pedal is operated while its operation amount pap is relatively small. Namely, the vehicle state determining portion 66 makes a determination as to whether the accelerator pedal is being operated, depending upon whether a rate of increase of the accelerator pedal operation amount pap is equal to or higher than a predetermined value while the accelerator pedal operation amount pap is smaller than a predetermined value i.e., a small-operation-amount range. The predetermined value of the operation amount pap is a lower limit of a predetermined high-accelerator-amount range in which the high degree of acceleration response of the vehicle is more desirable than the restriction or prevention of the tip-in shock. The predetermined value of the rate of increase of the operation amount pap is a lower limit of an amount of increase of the operation amount pap during each predetermined control cycle time, above which the accelerator pedal is considered to be operated. When the vehicle state determining portion 66 has determined that the accelerator pedal is being operated, the vehicle state determining portion 66 then makes the determination as to whether the vehicle 10 is placed in the non-driven state or not, depending upon whether the actual engine torque Te is smaller than the threshold value Teth* set by the threshold setting portion 68. The vehicle state determining portion 66 calculates the actual engine torque Te on the basis of the actual throttle valve opening angle tap and the engine speed Ne, and according to the engine torque map of Fig. 3. The threshold value Teth* is an upper limit of the engine torque Te below which the vehicle 10 is considered to be placed in the non-driven state. The threshold value Teth* is hereinafter referred to as "a non-driven-state determining threshold value Teth*".

Where the non-driven-state determining threshold value Teth* to be used for the determination as to whether the vehicle 10 is placed in the non-driven state is constant, there is a risk of implementation of the engine torque limiting control even when the engine torque Te is in a range in which the tip-in shock is not actually generated. In this event, there is a possibility of deterioration of the drivability of the vehicle 10 due to a low degree of the engine fuel economy and a low degree of the vehicle acceleration response. Alternatively, the engine torque limiting control may not be implemented even in the range of the engine torque Te in which the tip-in shock is actually generated. In this event, there is a possibility of deterioration of the drivability of the vehicle 10 due to generation of the tip-in shock. In this respect, it is necessary to accurately determine the range of the engine torque Te in which the tip-in shock is actually generated. That is, it is basically important to accurately make the determination as to whether the vehicle 10 is in the non-driven state or the driven state. The present embodiment is configured to improve the accuracy of the determination as to whether the vehicle 10 is in the non-driven state or not, in order to correctly determine whether the tip-in shock should be restricted or prevented. In other words, even when the vehicle 10 is actually placed in the non-driven state, it is not necessary to restrict or prevent the tip-in shock (namely, it is desirable not to implement the engine torque limiting control) where the degree of the tip-in shock is not so considerably high. For this reason, the determination as to whether the vehicle 10 is in the non-driven state should be made with a high degree of accuracy. In view of this, a vehicle control apparatus according to the present embodiment is configured to prevent a problem that the engine torque limiting control is unnecessarily implemented where the engine torque Te is in the range in which it is not necessary to restrict or prevent the tip-in shock, and a problem that the engine torque limiting control is not implemented where the engine torque Te is in the range in which it is necessary to restrict or prevent the tip-in shock.

It is required to increase the engine torque Te with an increase of the running speed V of the vehicle 10, for compensating for an increase of a running resistance of the vehicle 10 with the increase of the vehicle running speed V. Further, the engine torque Te is increased with an increase of the speed ratio $\gamma$ of the continuously variable transmission 26 (to shift down the continuously variable transmission 26 to its lowest gear position), so that likeliness of generation of the tip-in shock due to elimination of the backlash in the drive line (power transmitting system 16) in response to an increase of the accelerator pedal operation amount pap is increased with the increase of the engine torque Te. Therefore, the requirement for restricting or preventing the tip-in shock increases with the increase of the vehicle running speed V and the increase of the speed ratio $\gamma$. In view of this, the vehicle state determining portion 66 determines that the vehicle 10 is placed in the non-driven state, when the engine torque Te upon an increase of the accelerator pedal operation amount pap is smaller than the non-driven-state determining threshold value Teth* which is set by the threshold setting portion 68 such that the threshold value Teth* increases with the increase of the vehicle running speed V and the increase of the speed ratio $\gamma$ of the continuously variable transmission 26.

Described more specifically, the threshold setting portion 68 according to the present embodiment has a memory storing a predetermined non-driven-state determining threshold value map as shown in Fig. 5 by way of example, and calculates or sets the non-driven-state threshold value Teth* on the basis of the vehicle running speed V (or the output shaft speed Nout) and the speed ratio $\gamma$ of the continuously variable transmission 26, and according to the non-driven-state determining threshold value map. This map represents a relationship set in advance between the vehicle running speed V (output shaft speed Nout) and the non-driven-state determining threshold value Teth*, with the speed ratio $\gamma$ used as a control parameter. The non-driven-state determining threshold value map has a threshold value line corresponding to the highest speed ratio ymax (the lowest gear position), a threshold value line corresponding to the lowest speed ratio $\gamma$min (the highest gear position), and a plurality of threshold value lines between the two threshold value lines corresponding to the highest and lowest speed ratios ymax and ymin. The threshold setting portion 68 sets the threshold value Teth* at a value on one of the threshold value lines which corresponds to the actual speed ratio $\gamma$, which value corresponds to the actual vehicle running speed V. In the non-driven-state determining threshold value map of Fig. 5, a non-driven-state threshold value Teth1 which is set when the vehicle running speed V is relatively high while the speed ratio $\gamma$ is relatively high (while the continuously variable transmission 26 is placed in a relatively low gear position) is larger than a non-driven-state threshold value Teth0 which is set when the vehicle running speed V is relatively low while the speed ratio $\gamma$ is relatively low (while the continuously variable transmission 26 is placed in a relatively high gear position). Accordingly, the likeliness of the determination that the vehicle 10 is placed in the non-driven state, namely, the likeliness of implementation of the engine torque limiting control increases with an increase of the vehicle running speed V and an increase of the speed ratio $\gamma$. That is, the determination that the vehicle 10 is placed in the non-driven state is comparatively likely to be made where it is necessary to restrict or prevent the tip-in shock (where the tip-in shock is comparatively likely to be generated).

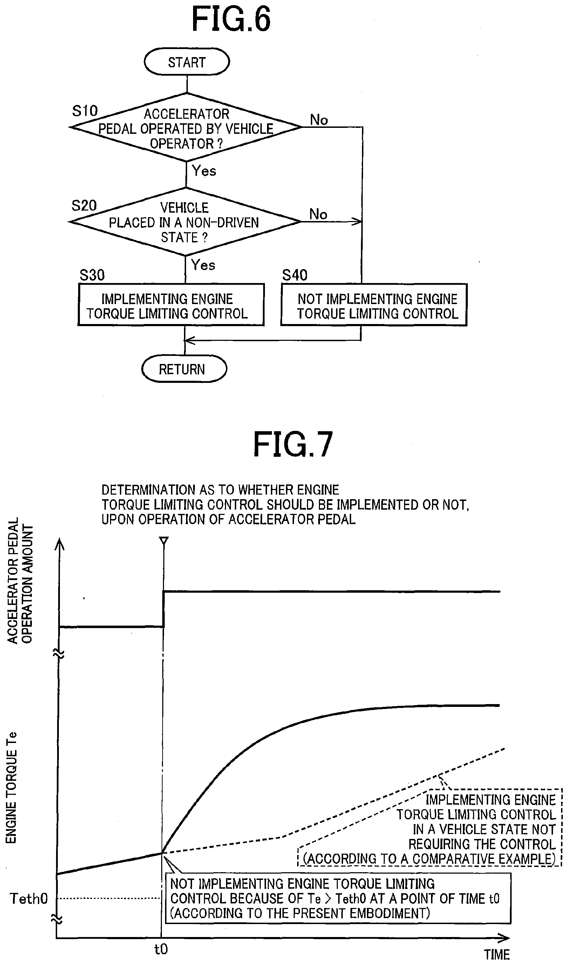

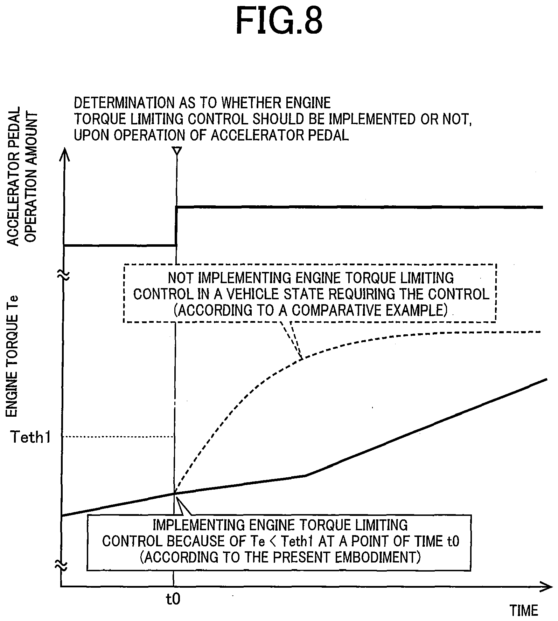

The flow chart of Fig. 6 illustrates an essential part of a control operation of the electronic control device 60, namely, a control operation which permits not only the restriction or prevention of the tip-in shock but also a high degree of drivability of the vehicle 10 upon an increase of the accelerator pedal operation amount pap. This control operation is repeatedly performed. The time charts of Figs. 7 and 8 indicate the state of the vehicle 10 when the control operation illustrated in the flow chart of Fig. 6 is performed.

The control operation of Fig. 6 is initiated with a step S10 corresponding to the vehicle state determining portion 66, to determine whether the accelerator pedal has been operated or depressed by the vehicle operator. This determination is made depending upon whether the accelerator pedal operation amount pap is smaller than the predetermined value i.e., the small-operation-amount range while the rate of increase of the accelerator pedal operation amount pap is equal to or higher than the predetermined value. If an affirmative determination is obtained in the step S10, the control flow goes to a step S20 also corresponding to the vehicle state determining portion 66, to determine whether the vehicle 10 is placed in a non-driven state or not. This determination is made depending upon whether the actual engine torque Te is smaller than the present non-driven-state determining threshold value Teth*. This non-driven-state determining threshold value Teth* is set on the basis of the vehicle running speed V (or the output shaft speed Nout) and the speed ratio $\gamma$ of the continuously variable transmission 26, and according to the non-driven-state determining threshold value map of Fig. 5, such that the threshold value Teth* increases with an increase of the vehicle running speed V and the increase of the speed ratio $\gamma$, as described above. If an affirmative determination is obtained in the step S20, the control flow goes to a step S30 corresponding to the engine control portion 62, to implement an engine torque limiting control for limiting an increase of the engine torque Te in response to an increase of the accelerator pedal operation amount pap. If a negative determination is obtained in the step S10 or S20, on the other hand, the control flow goes to a step S40 corresponding to the engine control portion 62, in which the engine torque limiting control is not implemented, so that the engine torque Te is increased at a comparatively high rate according to the accelerator pedal operation amount pap.

The time chart of Fig. 7 indicates an example of the control operation performed when the accelerator pedal is operated in a state of the vehicle 10 in which the tip-in shock is comparatively unlikely to be generated, for example, in a state of the vehicle 10 in which the vehicle running speed V is comparatively low while the speed ratio $\gamma$ of the continuously variable transmission 26 is comparatively low (while the continuously variable transmission 26 is placed in a comparatively high gear position). In the example of Fig. 7, the accelerator pedal operation amount pap is comparatively small before a point of time t0, so that the engine torque Te is increased at an accordingly low rate. When it is determined that the accelerator pedal has been further operated at the point of time t0, the determination as to whether the engine torque limiting control should be implemented or not (whether the vehicle 10 is placed in the non-driven state or not) is made at this point of time t0. If the non-driven-state determining threshold value Teth* were set to be held constant at a value larger than the actual engine torque Te at the point of time t0, the determination that the vehicle 10 is placed in the non-driven state would be made according to a comparative example, so that the engine torque limiting control would be implemented, as indicated by a broken line in Fig. 7. According to the comparative example, the engine torque limiting control is implemented in the state of the vehicle 10 in which it is not necessary to restrict or prevent the tip-in shock. According to the present embodiment of the invention, to the contrary, the non-driven-state determining threshold value Teth* is set at the value Teth0 to be used where the tip-in shock is unlikely to be generated, so that the actual engine torque Te at the point of time t0 is larger than the threshold value Teth0, whereby the engine torque limiting control is not implemented, as indicated by a solid line in Fig. 7. Accordingly, the acceleration response of the vehicle 10 is improved.

The time chart of Fig. 8 indicates an example of the control operation performed when the accelerator pedal is operated in a state of the vehicle 10 in which the tip-in shock is likely to be generated, for example, in a state of the vehicle 10 in which the vehicle running speed V is comparatively high while the speed ratio $\gamma$ of the continuously variable transmission 26 is comparatively high (while the continuously variable transmission 26 is placed in a comparatively low gear position). In the example of Fig. 8, the accelerator pedal operation amount pap is comparatively small before the point of time t0, so that the engine torque Te is increased at an accordingly low rate. When it is determined that the accelerator pedal has been further operated at the point of time t0, the determination as to whether the engine torque limiting control should be implemented or not (whether the vehicle 10 is placed in the non-driven state or not) is made at this point of time t0. If the non-driven-state determining threshold value Teth* were set to be held constant at a value smaller than the actual engine torque Te at the point of time t0, the determination that the vehicle 10 is placed in the non-driven state would not be made according to a comparative example, so that the engine torque limiting control would be not implemented, as indicated by a broken line in Fig. 8. According to the comparative example, the engine torque limiting control is not implemented in the state of the vehicle 10 in which it is necessary to restrict or prevent the tip-in shock. According to the present embodiment of the invention, to the contrary, the non-driven-state determining threshold value Teth* is set at the value Teth1 to be used where the tip-in shock is likely to be generated, so that the actual engine torque Te at the point of time t0 is smaller than the threshold value Teth1, whereby the engine torque limiting control is implemented, as indicated by a solid line in Fig. 8. Accordingly, the tip-in shock is restricted or prevented.

As described above, the present embodiment is configured to set the non-driven-state determining threshold value Teth* used for the determination as to whether the vehicle 10 is placed in the non-driven state or not, such that the threshold value Teth* increases with an increase of the vehicle running speed V and an increase of the speed ratio $\gamma$ of the continuously variable transmission 26, so that the determination that the vehicle 10 is placed in the non-driven state is more likely to be made when the vehicle running speed V is relatively high and when the speed ratio $\gamma$ is relatively high, making it possible to implement the engine torque limiting control so as to limit an increase of the engine torque Te in response to an increase of the accelerator pedal operation amount pap where the tip-in shock is likely to be generated, for thereby restricting or preventing the tip-in shock. Further, the present embodiment is configured to set the non-driven-state determining threshold value Teth* used for the determination as to whether the vehicle 10 is placed in the non-driven state or not, such that the threshold value Teth* decreases with a decrease of the vehicle running speed V and a decrease of the speed ratio $\gamma$ of the continuously variable transmission 26, so that the determination that the vehicle 10 is placed in the non-driven state is unlikely to be made when the vehicle running speed V is relatively low and when the speed ratio y is relatively low whereby the engine torque limiting control is unlikely to be implemented where the tip-in shock is unlikely to be generated, so that the acceleration response of the vehicle 10 is improved. Thus, the present embodiment permits not only the restriction or prevention of the tip-in shock but also a high degree of acceleration response of the vehicle 10, when the accelerator pedal operation amount pap is increased.

While the preferred embodiments of this invention have been described in detail by reference to the drawings, it is to be understood that the invention may be otherwise embodied.

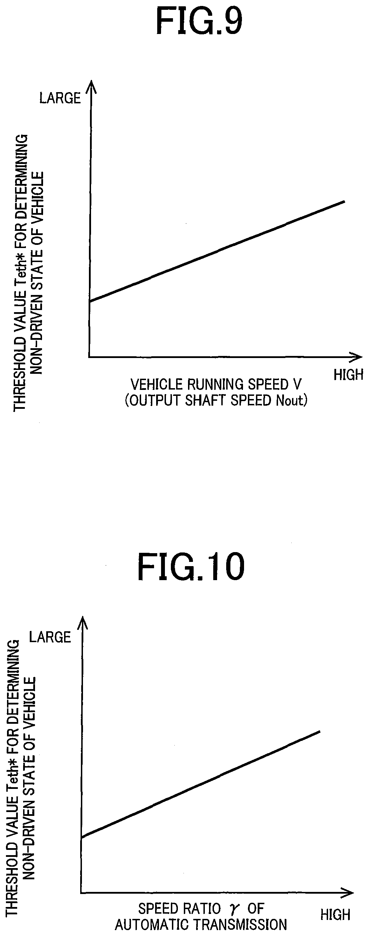

In the embodiment of Fig. 5, the threshold setting portion 68 sets the threshold value Teth* of the torque Te of the engine 12 such that the threshold value increases with both of the increase of the running speed V of the vehicle 10 and the increase of the speed ratio $\gamma$ of the automatic transmission 26. However, the threshold setting portion 68 may be configured to set the threshold value Teth* of the torque Te of the engine 12 according to a predetermined non-driven-state determining threshold value map shown in Fig. 9, such that the threshold value increases with the increase of the running speed V of the vehicle 10.

Alternatively, the threshold setting portion 68 may be configured to set the threshold value Teth* of the torque Te of the engine 12 according to a predetermined non-driven-state determining threshold value map shown in Fig. 10, such that the threshold value increases with the increase of the speed ratio $\gamma$ of the automatic transmission 26.

In the illustrated embodiments, the non-driven-state determining threshold value Teth* is set according to the non-driven-state determining threshold value map of Fig. 5, Fig. 9 or Fig. 10. However, the threshold value Teth* may be otherwise set. For instance, a compensation value with respect to a predetermined standard value of the non-driven-state determining threshold value Teth* may be calculated according to a predetermined relationship or map between the vehicle running speed V (or the output shaft speed Nout) and the compensation value compensating the standard value, while using the speed ratio $\gamma$ of the continuously variable transmission 26 as a control parameter. In this case, the final non-driven-state determining threshold value Teth* is set by adding the calculated compensation value to the predetermined standard value. In this modification, the speed ratio $\gamma$ of the continuously variable transmission 26 need not be used as the control parameter.

Although the continuously variable transmission 26 is a belt-and-pulley type continuously variable transmission in the illustrated embodiment, the vehicle 10 may be provided with any other type of continuously variable transmission. For instance, the transmission belt 40 used as the power transmitting element of the continuously variable transmission 26 may be replaced by a transmission chain. Namely, the belt-and-pulley type continuously variable transmission 26 may be replaced by a chain type continuously variable transmission. In a broad sense, the chain type continuously variable transmission may be considered as a kind of the belt-and-pulley type continuously variable transmission. Further, the continuously variable transmission may be a traction type continuously variable transmission. Further, the continuously variable transmission 26 may be replaced by any one of multiple-step type transmission such as a multiple-step transmission of planetary gear type, and a parallel two-axes transmission of a synchronous meshing type (such as a known DCT). Namely, the principle of the present invention is equally applicable to a vehicle provided with the engine 12, and an automatic transmission configured to transmit a drive force of the engine 12 to the drive wheels 14.

In the illustrated embodiment, the engine 12 is used as the vehicle drive power source. However, the vehicle drive power source is not limited to the engine 12. For example, the vehicle drive power source may include any other power source such as an electric motor or motors in addition to the engine 12. In the illustrated embodiment, the drive force of the engine 12 is transmitted to the continuously variable transmission 26 through the torque converter 18. However, the torque converter 18 may be replaced by any other fluid-operated power transmitting device such as a fluid coupling which does not have a torque boosting function. Further, the vehicle 10 need not be provided with any fluid-operated power transmitting device.

It is to be understood that the embodiments and modifications described above are given for illustrative purpose only, and that the present invention may be embodied with various other changes and improvements which may occur to those skilled in the art.

NOMENCLATURE OF REFERENCE SIGNS

- 10:   Vehicle
- 12:   Engine
- 14:   Drive wheels
- 26:   Continuously variable transmission (Automatic transmission)
- 60:   Electronic control device (Control apparatus)
- 62:   Engine control portion
- 66:   Vehicle state determining portion

**Claims**

1.   A control apparatus for a vehicle (10) including an engine (12), and an automatic transmission (26) to transmit a drive force of the engine to drive wheels (14), the control apparatus (60) including a vehicle state determining portion (66) configured to determine whether the vehicle (10) is placed in a non-driven state or not, and an engine control portion (62) configured to implement an engine torque limiting control to restrict an increase of a torque of the engine in response to an increase of an operation amount (pap) of a vehicle accelerating member, said control apparatus being **characterized by** further including:

 a threshold setting portion (68) configured to set a threshold value (Teth*) of an actual engine torque (Te) of the engine (12) such that the threshold value increases with at least one of an increase of a running speed (V) of the vehicle (10) and an increase of a speed ratio (γ) of the automatic transmission (26),
 and wherein said vehicle state determining portion (66) determines that the vehicle (10) is placed in the non-driven state when the torque (Te) of the engine (12) upon the increase of the operation amount (pap) of the vehicle accelerating member is smaller than the threshold value.

2.   The control apparatus according to claim 1, further including a sensor (78) for detecting an operation amount (pap) of an accelerator pedal, as the operation amount of the vehicle accelerating member.

3.   The control apparatus according to claim 1 or 2, wherein the threshold setting portion (68) is configured to set the threshold value (Teth*) of the torque (Te) of the engine (12) such that the threshold value increases with both of the increase of the running speed (V) of the vehicle (10) and the increase of the speed ratio (γ) of the automatic transmission (26).

**Patentansprüche**

1.   Steuervorrichtung für ein Fahrzeug (10), das einen Motor (12) und ein Automatikgetriebe (26) zum Übertragen einer Antriebskraft des Motors auf Antriebsräder (14) beinhaltet, wobei die Steuervorrichtung (60) einen Fahrzeugzustandsbestimmungsabschnitt (66), der dazu ausgelegt ist zu bestimmen, ob das Fahrzeug (10) in einem nicht angetriebenen Zustand platziert ist oder nicht, und einen Motorsteuerabschnitt (62), der dazu ausgelegt ist, eine Motordrehmomentbegrenzungssteuerung zu implementieren, um eine Erhöhung eines Drehmoments des Motors in Reaktion auf eine Erhöhung eines Betätigungsbetrags (pap) eines Fahrzeugbeschleunigungselements zu beschränken, beinhaltet, wobei die Steuervorrichtung **dadurch gekennzeichnet ist, dass** sie ferner Folgendes beinhaltet:

 einen Schwellwerteinstellabschnitt (68), der dazu ausgelegt ist, einen Schwellwert (Teth*) eines tatsächlichen Motordrehmoments (Te) des Motors (12) derart einzustellen, dass sich der Schwellwert mit mindestens einem einer Erhöhung einer Fahrgeschwindigkeit (V) des Fahrzeugs (10) und einer Erhöhung eines Übersetzungsverhältnisses (γ) des Automatikgetriebes (26) erhöht,
 und wobei der Fahrzeugzustandsbestimmungsabschnitt (66) bestimmt, dass das Fahrzeug (10) im nicht angetriebenen Zustand platziert ist, wenn das Drehmoment (Te) des Motors (12) nach der Erhöhung des Betätigungsbetrags (pap) des Fahrzeugbeschleunigungselements kleiner ist als der Schwellwert.

**2.** Steuervorrichtung nach Anspruch 1, die ferner einen Sensor (78) zum Detektieren eines Betätigungsbetrags (pap) eines Gaspedals als den Betätigungsbetrag des Fahrzeugbeschleunigungselements beinhaltet.

**3.** Steuervorrichtung nach Anspruch 1 oder 2, wobei der Schwellwerteinstellabschnitt (68) dazu ausgelegt ist, den Schwellwert (Teth*) des Drehmoments (Te) des Motors (12) derart einzustellen, dass sich der Schwellwert mit beidem der Erhöhung der Fahrgeschwindigkeit (V) des Fahrzeugs (10) und der Erhöhung des Übersetzungsverhältnisses ($\gamma$) des Automatikgetriebes (26) erhöht.

**Revendications**

**1.** Appareil de commande pour un véhicule (10) incluant un moteur (12), et une transmission automatique (26) pour transmettre une force motrice du moteur à des roues motrices (14), l'appareil de commande (60) incluant une portion de détermination d'état de véhicule (66) configurée pour déterminer le fait que le véhicule (10) est placé dans un état non moteur ou non, et une portion de commande de moteur (62) configurée pour mettre en oeuvre une commande de limitation de couple de moteur pour restreindre une augmentation d'un couple du moteur en réponse à une augmentation d'une quantité d'actionnement (pap) d'un élément d'accélération de véhicule, ledit appareil de commande étant **caractérisé en ce qu'**il inclut en outre :

une portion de réglage de seuil (68) configurée pour régler une valeur de seuil (Teth*) d'un couple de moteur réel (Te) du moteur (12) de telle sorte que la valeur de seuil augmente avec au moins une d'une augmentation d'une vitesse de déplacement (V) du véhicule (10) et d'une augmentation d'un rapport de vitesse (y) de la transmission automatique (26),
et dans lequel ladite portion de détermination d'état de véhicule (66) détermine que le véhicule (10) est placé dans l'état non moteur lorsque le couple (Te) du moteur (12) lors de l'augmentation de la quantité d'actionnement (pap) de l'élément d'accélération de véhicule est inférieure à la valeur de seuil.

**2.** Appareil de commande selon la revendication 1, incluant en outre un capteur (78) pour détecter une quantité d'actionnement (pap) d'une pédale d'accélérateur, en tant que quantité d'actionnement de l'élément d'accélération de véhicule.

**3.** Appareil de commande selon la revendication 1 ou 2, dans lequel la portion de réglage de seuil (68) est configurée pour régler la valeur de seuil (Teth*) du couple (Te) du moteur (12) de telle sorte que la valeur de seuil augmente avec les deux de l'augmentation de la vitesse de déplacement (V) du véhicule (10) et de l'augmentation du rapport de vitesse (y) de la transmission automatique (26).

# FIG.1

# FIG.2

# FIG.3

ENGINE TORQUE Te

tap=100[%]

tap=30[%]

tap=5[%]

INPUT SHAFT SPEED Nin
(ENGINE SPEED Ne)

# FIG.4

TARGET INPUT SHAFT SPEED  Nintgt

$\gamma$ max

pap
(tap)[%]

100

80

60

40

20

0

$\gamma$ min

0

VEHICLE RUNNING SPEED V
(OUTPUT SHAFT SPEED Nout)

# FIG.5

THRESHOLD VALUE Teth* FOR DETERMINING
NON-DRIVEN STATE OF VEHICLE

LARGE

$\gamma$ max
(LOWEST GEAR POSITION)

Teth1

$\gamma$ min
(HIGHEST GEAR POSITION)

Teth0

HIGH

VEHICLE RUNNING SPEED V (OUTPUT SHAFT SPEED Nout)

# FIG.6

```
                    ( START )
                        │
        S10     ┌───────────────────┐
         ╱──────  ACCELERATOR        ──────╲  No
        ╱  PEDAL OPERATED BY VEHICLE  ╲──────────┐
        ╲       OPERATOR ?            ╱          │
         ╲──────────────────────────╱           │
                    │ Yes                        │
        S20     ┌───────────────────┐            │
         ╱──────   VEHICLE           ──────╲  No  │
        ╱  PLACED IN A NON-DRIVEN     ╲──────────→│
        ╲       STATE ?               ╱          │
         ╲──────────────────────────╱           │
                    │ Yes                        │
   S30  ┌─────────────────────┐  S40  ┌─────────────────────┐
        │ IMPLEMENTING ENGINE │       │ NOT IMPLEMENTING ENGINE│
        │ TORQUE LIMITING     │       │ TORQUE LIMITING CONTROL│
        │ CONTROL             │       └─────────────────────┘
        └─────────────────────┘
                    │←──────────────────────────┘
                ( RETURN )
```

# FIG.7

DETERMINATION AS TO WHETHER ENGINE
TORQUE LIMITING CONTROL SHOULD BE IMPLEMENTED OR NOT,
UPON OPERATION OF ACCELERATOR PEDAL

IMPLEMENTING ENGINE
TORQUE LIMITING CONTROL
IN A VEHICLE STATE NOT
REQUIRING THE CONTROL
(ACCORDING TO A COMPARATIVE EXAMPLE)

NOT IMPLEMENTING ENGINE TORQUE LIMITING
CONTROL BECAUSE OF Te > Teth0 AT A POINT OF TIME t0
(ACCORDING TO THE PRESENT EMBODIMENT)

ACCELERATOR PEDAL OPERATION AMOUNT

ENGINE TORQUE Te

Teth0

t0

TIME

# FIG.8

DETERMINATION AS TO WHETHER ENGINE
TORQUE LIMITING CONTROL SHOULD BE IMPLEMENTED OR NOT,
UPON OPERATION OF ACCELERATOR PEDAL

ACCELERATOR PEDAL OPERATION AMOUNT

ENGINE TORQUE Te

Teth1

NOT IMPLEMENTING ENGINE TORQUE LIMITING
CONTROL IN A VEHICLE STATE REQUIRING THE CONTROL
(ACCORDING TO A COMPARATIVE EXAMPLE)

IMPLEMENTING ENGINE TORQUE LIMITING
CONTROL BECAUSE OF Te < Teth1 AT A POINT OF TIME t0
(ACCORDING TO THE PRESENT EMBODIMENT)

t0

TIME

17

# FIG.9

LARGE

THRESHOLD VALUE Teth* FOR DETERMINING
NON-DRIVEN STATE OF VEHICLE

VEHICLE RUNNING SPEED V
(OUTPUT SHAFT SPEED Nout)

HIGH

# FIG.10

LARGE

THRESHOLD VALUE Teth* FOR DETERMINING
NON-DRIVEN STATE OF VEHICLE

SPEED RATIO $\gamma$ OF
AUTOMATIC TRANSMISSION

HIGH

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009024305 A
- JP 2000229526 A